# EUROPEAN PATENT SPECIFICATION

(11) **EP 1 329 321 B1**
(45) Date of publication and mention of the grant of the patent: **08.12.2004**
(21) Application number: 02256618.6
(22) Date of filing: 24.09.2002
(51) Int. Cl.: B41J 2/165

(54) **Printing system**
Druckanordnung
Système d'impression

(30) Priority: 18.01.2002 KR 2002003121
(43) Date of publication of application: 23.07.2003
(73) Proprietor: Samsung Electronics Co., Ltd., Suwon-si, Gyeonggi-do 442-742 (KR)
(72) Inventor: Im, Dae-hyeok, Suwon-city, Gyunggi-do (KR); Ju, Young-bok, Sungnam-city, Gyunggi-do (KR); Park, Jin-ho, Giheung-eup, Yongin-city, Gyunggi-do (KR)
(74) Representative: Geary, Stuart Lloyd

(56) References cited:
- EP-A- 0 803 359
- US-A- 5 475 404
- US-A- 5 856 834

## Description

The present invention relates to a method of maintaining an inkjet print head, the method comprising performing a print head maintenance operation preparatory to servicing a print command, said maintenance operation being performed only if the time since the last print command was serviced exceeds a predetermined threshold, a printing system comprising an inkjet print head, control means configured for controlling the print head to perform a maintenance operation preparatory to servicing a print command, and a memory, wherein the control means is configured to store the time of the servicing of each print command in the memory, compare the current time with the most recent stored time before servicing a print command and only performing said maintenance operation if the difference between said times is greater than a threshold, and to a signal representing a printer driver for installation in a computer, wherein the printer driver is configured for causing a computer to store the time of each print command generated thereby and send a head maintenance command to a printer if, when servicing a print command, the difference between the current time and the most recent stored time is greater than a threshold.

Inkjet printers print images by ejecting ink onto paper in response to input data and usually comprise a head with a plurality of nozzles for ejecting ink. However, the nozzles sometimes cannot eject ink normally due to deterioration or other reasons. When one of the nozzles cannot normally eject the ink, the quality of the printing becomes unsatisfactory and a white line may appear on the printed image.

To prevent the above malfunction of the nozzles, a head maintenance operation is performed. The maintenance operation includes a spitting operation in which the nozzles are instructed to eject ink, a wiping operation for wiping ink residue from a portion of the nozzles, a capping operation for capping the nozzles, and a suction operation for drawing ink from the nozzles. When some or all operations among the above operations are performed, any ink residue is removed from the nozzles, and thus the ink is easily ejected through the nozzles.

The above maintenance operation is performed when a certain condition is met. In a conventional inkjet printer, the maintenance operation is performed when power is cut and again supplied, when a user inputs an maintenance execution command before printing on a page in a printing operation, and when the user thinks that the printing operation has not performed for a predetermined time period.

The maintenance is set up differently for each condition. For example, when the power is supplied, the wiping operation is performed once, the spitting operation is performed several times, and both the wiping and spitting operations are repeated twice. When the user inputs the execution command, the wiping operation is performed once, the spitting is performed several times, and both the wiping and spitting operations are repeated three times. When the printing operation is performed on each page, the wiping operation is performed once, the spitting operation is performed several times, and both the wiping and spitting operations are performed once.

However, according to the conventional maintenance control method, the maintenance operation is performed regardless of the duration of the power cut when the maintenance operation is performed at power on. Thus, there is a problem that an incomplete maintenance operation with less intensity than is actually required may be performed. Accordingly, printing can be performed with clogged nozzles, which reduces the print quality and leads to the waste of paper.

Moreover, when the maintenance operation is performed when required by the user, the user has to know about a non-printing period that the printing operation is not performed so as to perform the actually desired maintenance operation.

Furthermore, even if the user knows the period for which the printer has been idle, it is hard for the user to recognize that cleaning commensurate with the printer's idle time has been performed. Therefore, unnecessary or insufficient maintenance operations may be performed. EP-A-0803359 discloses a printed in which a maintenance operation is performed if more than a predetermined time has elapsed since the last print request was serviced.

A method of maintaining a print head according to the present invention is characterised in that said maintenance operation is performed only if a user input confirmation thereof is received.

Preferably, the intensity of said maintenance operation is dependent on said time.

A printing system according to the present invention is characterised by the system includes a display and user input means, and the control means is configured to display a confirmation request message on the display if said threshold is exceeded and only perform the maintenance operation in response to an affirmative response to said message from the user input means.

The print head, the control means, the display, the memory and the user input means may be provided in a printer. Alternatively, the print head may be provided in a printer, with the display and the user input means provided in a computer, to which the printer is connected, and the control means is distributed between the printer and the computer.

Preferably, the control means is configured to control the intensity of said maintenance operation in dependence on the magnitude of the difference between said current time and said stored time.

According to the present invention, there is also provided a signal representing a printer driver for installation in a computer, wherein the printer driver is configured for causing a computer to store the time of each print command generated thereby and send a head maintenance command to a printer if, when servicing a print command, the difference between the current time and the most recent stored time is greater than a threshold, and wherein the printer driver is configured for causing a confirmation dialog to be displayed, allowing a user to confirm that a maintenance operation is to be performed, when said threshold is exceeded.

An embodiment of the present invention will now be described, by way of example, with reference to the accompanying drawings, in which:-
Figure 1 is a block diagram showing an inkjet printer according to the present invention;
Figure 2 is a flowchart showing a maintenance method performed by the inkjet printer of Figure 1; and
Figures 3A and 3B are views showing message screens displayed on a display unit of the printer of Figure 1.

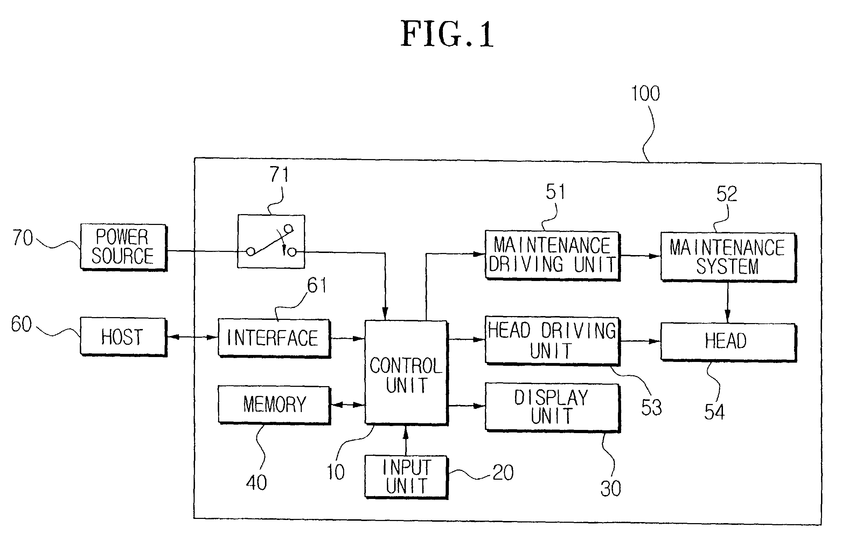

Referring to Figure 1, an inkjet printer 100 comprises a head 54 having a plurality of nozzles, a maintenance system 52 for performing a head maintenance operation, an interface 61 for interfacing with a host 60, a memory 40 storing information about printed data or files, a display unit 30 for displaying messages, an input unit 20 for enabling input of execution commands for performing the maintenance operation, a power switch 71 for controlling power supplied from an external power source 70, and a control unit 10 for controlling the printing operation and the maintenance operation of the printer.

Power supplied from the power source 70 through the power switch 71 is supplied to each part of the inkjet printer 100.

The inkjet printer 100 is connected to the host 60, which may be a computer for example, through the interface 61. After a printing command and/or printing data is received from the host 60, the printing command and/or the printing data is transmitted to the control unit 10 through the interface 61 in a printing operation.

The control unit 10 drives the head 54 through a head driving unit 53. In other words, when the printing command and the printing data are input into the control unit 10, then the control unit 10 drives the head 54 to print in accordance with the printing data on paper. Accordingly, the printing data is printed on the paper while the nozzles of the head 54 are controlled to eject ink onto the paper in accordance with the printing data. Moreover, the control unit 10 performs a spitting operation among several maintenance operations through the head driving unit 52. The spitting operation is performed by the nozzles of the head 54 which are controlled to eject the ink on the paper in response to a spitting command of the control unit 10.

The control unit 10 also drives the maintenance system 52 through a maintenance driving unit 51. The maintenance system 52 performs the wiping, capping, and suction operations, but not the spitting operation, of the above-described maintenance operations.

A list of the printing data, printed using the head 54, is stored in the memory 40. In other words, after the control unit 10 performs the printing operation, by driving the head 54 according to the transmitted printing command and printing data, the control unit 10 records information about the printed printing data in the memory 40. The printing information includes the file name of the printing data, the number of pages printed, a printing time (and/or possibly date) of the printing operation, etc. The file name or the number of the pages printed does not necessarily have to be recorded, but the printing time must be recorded.

The display unit 30 displays a message requesting the maintenance operation when there is a need to perform the maintenance operation. In other words, the control unit 10 displays the message through the display unit 30 when conditions, described below, are met. The display unit 10 may be an LCD unit.

The user inputs the execution command for performing the maintenance operation through the input unit 20. When the user inputs the execution command for performing the maintenance operation through the input unit 20, the execution command is transmitted to the control unit 10, and the control unit 10 performs the nozzle maintenance operation by controlling the maintenance driving unit 51 and/or the head driving unit 53 in response to the execution command.

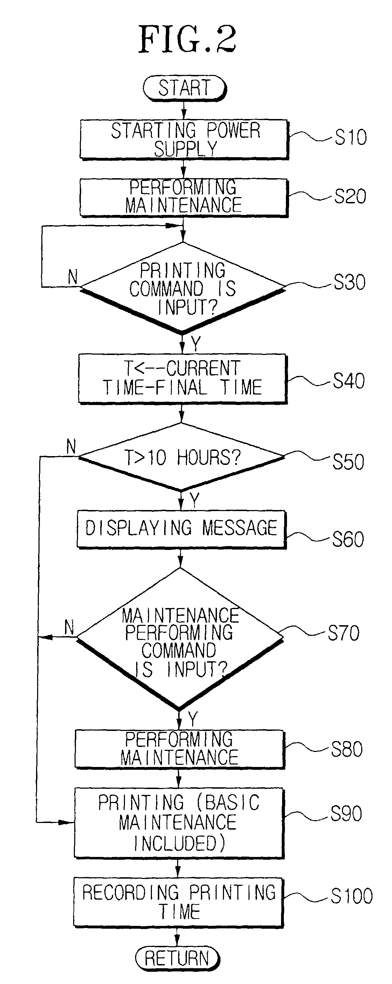

Referring to Figure 2, when the power switch 71 of the inkjet printer 100 is turned on in operation S10, the control unit 10 performs a basic maintenance operation S20. At this time, the basic maintenance operation is performed by, for example, wiping the nozzle once and spitting the ink twice. However, in the case that the power is supplied by turning on the power switch 71, the above operations S10 and S20 performing the basic maintenance operation are omitted in another embodiment of the present invention.

When the printing command is transmitted from the host 60 in operation S30, the control unit 10 retrieves the time and/or date of the printing operation most recently (finally) performed by the inkjet printer 100 before the printing command is input, based on the data stored in the memory 40, and calculates a time difference T between the last printing time and an input time for the current printing command in operation S40. The control unit 10 determines whether the time difference T is greater than a predetermined time, for example 10 hours in operation S50. If the time difference T is not greater than the predetermined time, the control unit 10 drives the head 54 to print the printing data transmitted from the host 60 in operation S90.

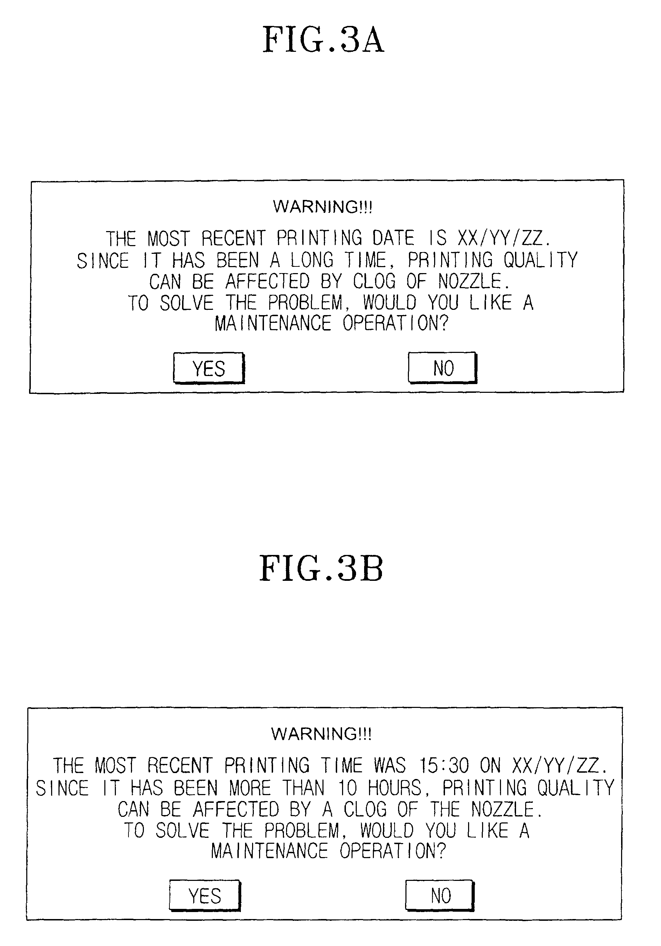

If however the time difference T is greater than the predetermined time, e.g. 10 hours, the control unit 10 displays a message requesting the maintenance operation of the head 54 on the display unit 30 in operation S60. As shown in Figures 3A, the message includes information about the last time and invites the user to input a maintenance operation command. An alternative message shown in Figure 3B includes the time of the last printing operation as well as its date.

When the user inputs the execution command to perform the maintenance operation through the input unit 20 in operation S70, the execution command is transmitted to the control unit 10, and the control unit 10 performs the maintenance operation by driving the maintenance system 52 and/or the head 54 in operation S80. The maintenance operation is performed by, for example, repeating the three time spitting and one time wiping operations twice.

The maintenance operation is performed so that the repeating of the maintenance operation is performed more than twice in response to the time difference T, that is, the greater the time difference T is, the greater the intensity of the maintenance operation. For example, when the time difference T is over 20 hours, the three time spitting and one time wiping operations are repeated four times.

When the maintenance operation is completed, the control unit 10 prints the printing data transmitted from the host 60 on the paper by driving the head 54. While the head 54 is performing the printing operation in operation S90, a basic maintenance operation is performed. For example, as described before in the description of the prior art, whenever a page is printed, the wiping operation is performed once and the spitting operation is performed several times.

When the printing operation is completed, the control unit 10 records the printing time of the completed printing data to the memory 40 in operation S100. The recorded printing time is used again as a new final time when a next printing command is input.

In this embodiment of the present invention, the inkjet printer 100 includes the input unit 20, the memory 40, and the display unit 30 to perform all of the functions relating to the maintenance operation. Yet, some or all of these functions can be performed by the host 60, and some or all of the input unit 20, the memory 40, and the display unit 30 may be installed in the host 60. In other words, the above functions can be included in a printer driver installed in the host 60.

For example, the message could be displayed on a separate display apparatus of the host 60 by transmitting message data to the host 60 through the interface 61, without displaying the message on the display unit 30. Accordingly, the user can be informed whether the maintenance operation of the inkjet printer 100 is required while working with a host 60 comprising a personal computer.

Moreover, the execution command requesting the maintenance operation and/or the printing operation can be input by using the host 60 without inputting the execution command through the input unit 20 after the message is displayed.

In addition, the last printing time can be stored in a memory in the host 60, which generates the execution command, without being stored in the memory 40. For example, the printer driver of the host 60 can have a function for managing the printing command transmitted from a control portion of the host 60 and storing a history of printing information including the last printing time. Accordingly, the printing information about the name, type, amount, or printing time of the printed printing data is stored by the printer driver as a database. When the printing command is transmitted from the host 60, some or all of the printing information are transmitted to the inkjet printer 100, and the control unit 10 can obtain the final time based on the transmitted printing information. Thus, the above-described maintenance operation can be performed.

Therefore, as every operation for controlling the maintenance operation is performed by the host 60, in other words, as the last printing time is transmitted from the host 60 to the inkjet printer 100, the message is transmitted from the inkjet printer 100 to the host 60, and the execution command is input after the message is displayed is transmitted from the host 60 to the inkjet printer 100. The maintenance operation can be implemented in the inkjet printer 100 and the host 60 without requiring separate hardware. Accordingly, the user can properly control the maintenance operation using the host 60, and thus the convenience of the maintenance operation is improved.

According to the present invention, the maintenance operation is performed based on the time difference between the final time of the most recently performed printing operation and the current time to perform a current printing operation. At this time, the greater the time difference is, the greater the intensity of the maintenance operation is. Therefore, the maintenance operation is performed in accordance with an actually required degree of the maintenance operation when the maintenance operation should be performed. An unnecessary maintenance operation can be avoided or an incomplete maintenance operation is prevented.
Furthermore, the message requesting the maintenance operation is provided to the user before the printing operation, and thus the user can easily recognize that the maintenance operation is needed and maintenance is performed only if a user input confirmation thereof is received. Therefore, unnecessary maintenance is prevented.

## Claims

1. A method of maintaining an inkjet print head (54), the method comprising performing a print head maintenance operation preparatory to servicing a print command, said maintenance operation being performed only if the time since the last print command was serviced exceeds a predetermined threshold, and being **characterised in that** said maintenance operation is performed only if a user input confirmation thereof is received.

2. A method according to claim 1, wherein the intensity of said maintenance operation is dependent on said time.

3. A method according to claim 1, comprising:
receiving a print command;
calculating a time difference between the input time of the print command and the input time of the most recent preceding print command;
displaying a message requesting confirmation of the maintenance operation in dependence on the calculated time difference;
receiving a user input in response to said message; and
performing the maintenance operation before servicing the print command in response to said user input confirming performance of the maintenance operation.

4. A method according to claim 3, wherein the maintenance operation comprises at least one of spitting, wiping, capping and suction operations of the nozzles of the print head (54).

5. A method according to claim 3, wherein the maintenance operation is performed when the calculated time difference is approximately 10 hours.

6. A method according to claim 3, further comprising:
detecting energising of the printer (100) containing the print head (54); and
performing a power on maintenance operation of the head when energising of the printer (100) is detected.

7. A method according to claim 3, wherein said message is transmitted from the printer (100), containing the print head (54), to a host (60), disposed outside and coupled to said printer (100), and said message is displayed by the host (60).

8. A method according to claim 3, wherein the intensity of the maintenance operation is proportional to the calculated time difference.

9. A method according to claim 1, comprising:
receiving the print command;
detecting the input time of said print command and the time of the most recently received preceding print command;
calculating the time difference between said input times; and
selectively performing the maintenance operation in dependence on the time difference,
wherein the maintenance operation is performed in respect of a plurality of nozzles in the print head (54).

10. A method according to claim 9, further comprising:
controlling the performing of the maintenance operation in response to the magnitude of said time difference.

11. A method according to claim 9, wherein the maintenance operation comprises at least one of spitting, wiping, capping and suction operations of the nozzles of the print head head (54), and the number of operations performed is greater for larger time differences.

12. A printing system comprising:
an inkjet print head (54),
control means (10,60) configured for controlling the print head (54) to perform a maintenance operation preparatory to servicing a print command, and
a memory (40),
wherein the control means (10, 60) is configured to store the time of the servicing of each print command in the memory (40), compare the current time with the most recent stored time before servicing a print command and only performing said maintenance operation if the difference between said times is greater than a threshold, and
**characterised in that** the system includes a display (30) and user input means (20), and the control means (10, 60) is configured to display a confirmation request message on the display (30) if said threshold is exceeded and only perform the maintenance operation in response to an affirmative response to said message from the user input means (20).

13. A printing system according to claim 12, wherein the print head (54), the control means (10, 60), the display (30), the memory (40) and the user input means (20) are provided in a printer (100).

14. A printing system according to claim 12, wherein the print head (54) is provided in a printer (100), the display and the user input means are provided in a computer (60), to which the printer (100) is connected, and the control means is distributed between the printer (100) and the computer (60).

15. A printing system according to claim 12, 13 or 14, wherein the control means (10, 60) is configured to control the intensity of said maintenance operation in dependence on the magnitude of the difference between said current time and said stored time.

16. A printing system according claim 12, comprising:
a maintenance unit (51, 52) for performing said print head maintenance operation; and
an interface (61) for receiving print data and print commands; and wherein:
the print head (54) has a plurality of nozzles for ejecting ink;
the control means (10, 60) is configured to calculate the time difference between the current time with said most recent stored time and control the maintenance unit (51, 52) so as to perform the maintenance operation before the current print command is serviced if said time difference is greater than a predetermined time period.

17. A printing system according claim 16, wherein the maintenance operation comprises at least one of spitting, wiping, capping and suction operations of the nozzles.

18. A printing system according claim 16, comprising an inkjet printer (100) coupled to a host (60) by means of the interface (61), wherein the control means (10, 60) comprises a control unit (10) in the printer (100) and the control unit (10) is configured to transmit a confirmation request message, requesting confirmation for the print head maintenance operation, to the host (60) through the interface (61) when the time difference is greater than the predetermined time period.

19. A printing system according claim 18, wherein the control unit (10) is configured to control the maintenance unit (51, 52) so that the maintenance operation is performed in response to a maintenance operation confirmation signal input from the host (60) after transmission of the confirmation request message to the host (60).

20. A printing system according claim 12, further comprising a power switch (71) connected to an external power source for turning the printer on and off, wherein the control means (10, 60) includes a control unit (10) in the printer (100) which is configured for detecting the time when the printer (100) is turned o ff.

21. A printing system according claim 20, wherein the control unit (10) is configured to detect the time when power is supplied to the inkjet printer (100) after the inkjet printer has been turned off.

22. A printing system according claim 20, wherein the control unit (10) is configured to detect the start and end times of a power off period between the successive printing operations.

23. A signal representing a printer driver for installation in a computer (60), wherein the printer driver is configured for causing a computer (60) to store the time of each print command generated thereby and send a head maintenance command to a printer (100) if, when servicing a print command, the difference between the current time and the most recent stored time is greater than a threshold, **characterised in that** the printer driver is configured for causing a confirmation dialog to be displayed, allowing a user to confirm that a maintenance operation is to be performed, when said threshold is exceeded.

24. A recording of a signal according to claim 23.

25. A computer programmed with a signal according to claim 23.

## Patentansprüche

1. Verfahren zum Warten eines Tintenstrahl-Druckkopfs (54), wobei das Verfahren die Durchführung eines Druckkopf-Wartungsvorgangs vorbereitend für die Abarbeitung eines Druckbefehls umfasst, wobei der Wartungsvorgang nur durchgeführt wird, wenn der Zeitraum, seit der letzte Druckbefehl abgearbeitet wurde, einen vorbestimmten Schwellenwert übersteigt, und **dadurch gekennzeichnet ist, dass** der Wartungsvorgang nur durchgeführt wird, wenn eine Eingabebestätigung des Anwenders dafür empfangen wird.

2. Verfahren nach Anspruch 1, wobei die Intensität dieses Wartungsvorgangs abhängig von dem Zeitraum ist.

3. Verfahren nach Anspruch 1, umfassend:
Empfangen eines Druckbefehls;
Berechnen eines Zeitunterschieds zwischen der Eingabezeit des Druckbefehls und der Eingabezeit des zuletzt vorangegangenen Druckbefehls;
Anzeigen einer Mitteilung, welche eine Bestätigung des Wartungsvorgangs in Abhängigkeit von dem berechneten Zeitunterschied anfordert;
Empfangen einer Anwendereingabe in Antwort auf die Mitteilung; und
Durchführen des Wartungsvorgangs vor Abarbeiten des Druckbefehls in Antwort auf die Anwendereingabe, welche die Durchführung des Wartungsvorgangs bestätigt.

4. Verfahren nach Anspruch 3, wobei der Wartungsvorgang zumindest einen Ausstoß-, Wisch-, Abdeck- und/oder Absaugvorgang der Düsen des Druckkopfs (54) umfasst.

5. Verfahren nach Anspruch 3, wobei der Wartungsvorgang durchgeführt wird, wenn der berechnete Zeitunterschied ungefähr 10 Stunden beträgt.

6. Verfahren nach Anspruch 3, ferner umfassend:
Erfassen, dass dem Drucker (100), der den Druckkopf (54) enthält, Strom zugeführt wird; und
Durchführen eines Einschalt-Wartungsvorgangs des Kopfes, wenn erfasst wird, dass dem Drucker (100) Strom zugeführt wird.

7. Verfahren nach Anspruch 3, wobei die Mitteilung vom Drucker (100), der den Druckkopf (54) enthält, zu einem Hauptrechner (60), der außerhalb angeordnet und mit dem Drucker (100) verbunden ist, übertragen wird und die Mitteilung durch den Hauptrechner (60) angezeigt wird.

8. Verfahren nach Anspruch 3, wobei die Intensität des Wartungsvorgangs proportional zum berechneten Zeitunterschied ist.

9. Verfahren nach Anspruch 1, umfassend:
Empfangen des Druckbefehls;
Erfassen des Eingabezeitpunkts des Druckbefehls und des Zeitpunkts des zuletzt empfangenen vorangehenden Druckbefehls;
Berechnen des Zeitunterschieds zwischen den Eingabezeitpunkten; und
selektives Durchführen des Wartungsvorgangs in Abhängigkeit von dem Zeitunterschied,
wobei der Wartungsvorgang in Bezug auf eine Vielzahl von Düsen in dem Druckkopf (54) durchgeführt wird.

10. Verfahren nach Anspruch 9, ferner umfassend:
Steuern der Durchführung des Wartungsvorgangs in Antwort auf die Größe des Zeitunterschieds.

11. Verfahren nach Anspruch 9, wobei der Wartungsvorgang zumindest einen Ausstoß-, Wisch-, Abdeck- und/oder Absaugvorgang der Düsen des Druckkopfs (54) umfasst und die Anzahl durchgeführten Vorgänge für längere Zeitunterschiede größer ist.

12. Drucksystem, umfassend:
einen Tintenstrahl-Druckkopf (54),
eine Steuereinrichtung (10, 60) ausgelegt zum Steuern des Druckkopfs (54), um einen Wartungsvorgang vorbereitend für eine Abarbeitung eines Druckbefehls durchzuführen, und
einen Speicher (40),
wobei die Steuereinrichtung (10, 60) ausgelegt ist, um den Zeitpunkt des Abarbeitens jedes Druckbefehls im Speicher (40) zu speichern, den aktuellen Zeitpunkt mit dem letzten gespeicherten Zeitpunkt vor Abarbeiten eines Druckbefehls zu vergleichen und den Wartungsvorgang nur durchzuführen, wenn der Unterschied zwischen den Zeitpunkten größer als ein Schwellenwert ist, und
**dadurch gekennzeichnet, dass** das System eine Anzeige (30) und eine Anwendereingabeeinrichtung (20) umfasst, und die Steuereinrichtung (10, 60) ausgelegt ist, um eine Bestätigungsanforderungsmeldung auf der Anzeige (30) anzuzeigen, wenn der Schwellenwert überschritten ist und den Wartungsvorgang nur in Antwort auf eine positive Antwort auf diese Meldung von der Anwendereingabeeinrichtung (20) durchzuführen.

13. Drucksystem nach Anspruch 12, wobei der Druckkopf (54), die Steuereinrichtung (10, 60), die Anzeige (30), der Speicher (40) und die Anwendereingabeeinrichtung (20) in einem Drucker (100) vorgesehen sind.

14. Drucksystem nach Anspruch 12, wobei der Druckkopf (54) in einem Drucker (100) vorgesehen ist, die Anzeige und die Anwendereingabeeinrichtung in einem Rechner (60) vorgesehen sind, mit dem der Drucker (100) verbunden ist, und die Steuereinrichtung zwischen dem Drucker (100) und dem Rechner (60) aufgeteilt ist.

15. Drucksystem nach Anspruch 12, 13 oder 14, wobei die Steuereinrichtung (10, 60) ausgelegt ist, um die Intensität des Wartungsvorgangs in Abhängigkeit von der Größe des Unterschiedes zwischen dem aktuellen Zeitpunkt und dem gespeicherten Zeitpunkt zu steuern.

16. Drucksystem nach Anspruch 12, umfassend:
eine Wartungseinheit (51, 52) zum Durchführen des Druckkopf-Wartungsvorgangs; und
eine Schnittstelle (61) zum Empfangen von Druckdaten und Druckbefehlen; und wobei:
der Druckkopf (54) eine Vielzahl von Düsen zum Ausstoßen von Tinte aufweist;
die Steuereinrichtung (10, 60) ausgelegt ist, um den Zeitunterschied zwischen dem aktuellen Zeitpunkt und dem zuletzt gespeicherten Zeitpunkt zu berechnen und die Wartungseinheit (51, 52) zu steuern, um den Wartungsvorgang durchzuführen, bevor der aktuelle Druckbefehl abgearbeitet ist, wenn der Zeitunterschied größer als ein vorbestimmter Zeitraum ist.

17. Drucksystem nach Anspruch 16, wobei der Wartungsvorgang zumindest einen Ausstoß-, Wisch-, Abdeck- und/oder Absaugvorgang der Düsen umfasst.

18. Drucksystem nach Anspruch 16, umfassend einen Tintenstrahldrucker (100), der mittels der Schnittstelle (61) mit einem Hauptrechner (60) verbunden ist, wobei die Steuereinrichtung (10, 60) eine Steuereinheit (10) im Drucker (100) umfasst und die Steuereinheit (10) ausgelegt ist, um eine Bestätigungsanforderungsmitteilung, welche die Bestätigung für den Druckkopf-Wartungsvorgang anfordert, über die Schnittstelle (61) zum Hauptrechner (60) zu übertragen, wenn der Zeitunterschied größer als ein vorbestimmter Zeitraum ist.

19. Drucksystem nach Anspruch 18, wobei die Steuereinheit (10) ausgelegt ist, um die Wartungseinheit (51, 52) zu steuern, so dass der Wartungsvorgang in Antwort auf eine Wartungsvorgangsbestätigungs-Signaleingabe vom Hauptrechner (60) nach Übertragung der Bestätigungsanforderungsmitteilung an den Hauptrechner (60) durchgeführt wird.

20. Drucksystem nach Anspruch 12, ferner umfassend einen Stromschalter (71), der mit einer externen Stromquelle verbunden ist, um den Drucker ein- und auszuschalten, wobei die Steuereinrichtung (10, 60) eine Steuereinheit (10) im Drucker (100) umfasst, die ausgelegt ist, um den Zeitpunkt, wenn der Drucker (100) ausgeschaltet wird, zu erfassen.

21. Drucksystem nach Anspruch 20, wobei die Steuereinheit (10) ausgelegt ist, um den Zeitpunkt, wenn dem Tintenstrahldrucker (100) Strom zugeführt wird, nachdem der Tintenstrahldrucker ausgeschaltet war, zu erfassen.

22. Drucksystem nach Anspruch 20, wobei die Steuereinheit (10) ausgelegt ist, um den Start- und den Endzeitpunkt eines ausgeschalteten Zeitraums zwischen aufeinanderfolgenden Druckvorgängen zu erfassen.

23. Signal, das einen Druckertreiber zur Installation in einem Rechner (60) darstellt, wobei der Druckertreiber ausgelegt ist, um einen Rechner (60) zu veranlassen, den Zeitpunkt jedes Druckbefehls, der von diesem erzeugt wird, zu speichern und einen Kopfwartungsbefehl an einen Drucker (100) zu senden, falls, beim Abarbeiten eines Druckbefehls, der Unterschied zwischen dem aktuellen Zeitpunkt und dem zuletzt gespeicherten Zeitpunkt größer als ein Schwellenwert ist, **dadurch gekennzeichnet, dass** der Druckertreiber ausgelegt ist, um einen Bestätigungsdialog anzeigen zu lassen, was es einem Anwender ermöglicht zu bestätigen, dass ein Wartungsvorgang durchgeführt werden soll, wenn der Schwellenwert überschritten ist.

24. Aufzeichnen eines Signals nach Anspruch 23.

25. Rechner, der mit einem Signal nach Anspruch 23 programmiert ist.

## Revendications

1. Procédé d'entretien d'une tête (54) d'impression à jet d'encre, le procédé comprenant l'exécution d'une opération d'entretien d'une tête d'impression en préparation au service d'un ordre d'impression, ladite opération d'entretien étant exécutée uniquement si le temps écoulé depuis que le dernier ordre d'impression a été servi dépasse un seuil prédéterminé, et étant **caractérisé en ce que** ladite opération d'entretien est exécutée uniquement si une confirmation de cette opération par une entrée d'un utilisateur est reçue.

2. Procédé selon la revendication 1, dans lequel l'intensité de ladite opération d'entretien dépend dudit temps.

3. Procédé selon la revendication 1, comprenant :
la réception d'un ordre d'impression ;
le calcul d'une différence de temps entre le temps d'arrivée de l'ordre d'impression et le temps d'arrivée de l'ordre d'impression précédent le plus récent ;
l'affichage d'un message demandant confirmation de l'opération d'entretien en fonction de la différence de temps calculée ;
la réception d'une entrée par un utilisateur en réponse audit message ; et
l'exécution de l'opération d'entretien avant de servir l'ordre d'impression en réponse à la confirmation par ladite entrée de l'utilisateur de l'exécution de l'opération d'entretien.

4. Procédé selon la revendication 3, dans lequel l'opération d'entretien comprend au moins l'une des opérations de projection, d'essuyage, de coiffage et d'aspiration des gicleurs de la tête d'impression (54).

5. Procédé selon la revendication 3, dans lequel l'opération d'entretien est exécutée lorsque la différence de temps calculée est d'environ 10 heures.

6. Procédé selon la revendication 3, comprenant en outre :
la détection de la fourniture d'énergie à l'imprimante (100) comprenant la tête d'impression (54) ; et
l'exécution d'une opération d'entretien sous tension de la tête lorsque l'application d'énergie à l'imprimante (100) est détectée.

7. Procédé selon la revendication 3, dans lequel ledit message est transmis depuis l'imprimante (100), contenant la tête d'impression (54), à un hôte (60), disposé à l'extérieur et relié à ladite imprimante (100), et ledit message est affiché par l'hôte (60).

8. Procédé selon la revendication 3, dans lequel l'intensité de l'opération d'entretien est proportionnelle à la différence de temps calculée.

9. Procédé selon la revendication 1, comprenant :
la réception de l'ordre d'impression ;
la détection du temps d'arrivée dudit ordre d'impression et du temps de l'ordre d'impression précédent reçu le plus récemment ;
le calcul de la différence de temps entre lesdits temps d'arrivée ; et
l'exécution sélective de l'opération d'entretien en fonction de la différence de temps,
dans lequel l'opération d'entretien est exécutée pour plusieurs gicleurs dans la tête d'impression (54).

10. Procédé selon la revendication 9, comprenant en outre :
la commande de l'exécution de l'opération d'entretien en réponse à l'amplitude de ladite différence de temps.

11. Procédé selon la revendication 9, dans lequel l'opération d'entretien comprend au moins l'une des opérations de projection, d'essuyage, de coiffage et d'aspiration des gicleurs de la tête d'impression (54), et le nombre d'opérations exécutées est plus élevé pour des différences de temps plus grandes.

12. Système d'impression comportant :
une tête (54) d'impression à jet d'encre ;
un moyen de commande (10, 60) configuré pour commander la tête d'impression (54) afin d'effectuer une opération d'impression en préparation à un service d'un ordre d'impression ; et
une mémoire (40),
dans lequel le moyen de commande (10, 60) est configuré de façon à stocker le temps du service de chaque ordre d'impression dans la mémoire (40), à comparer le temps actuel au temps stocké le plus récent avant le service d'un ordre d'impression et à n'exécuter ladite opération d'entretien que si la différence entre lesdits temps est supérieure à un seuil, et
**caractérisé en ce que** le système comprend un afficheur (30) et un moyen (20) d'entrée par l'utilisateur, et le moyen de commande (10, 60) est configuré de façon à afficher un message de demande de confirmation sur l'afficheur (30) si ledit seuil est dépassé, et à n'exécuter l'opération d'entretien qu'à la suite d'une réponse affirmative audit message provenant du moyen (20) d'entrée par l'utilisateur.

13. Système d'impression selon la revendication 12, dans lequel la tête d'impression (54), le moyen de commande (10, 60), l'afficheur (30), la mémoire (40) et le moyen (20) d'entrée par l'utilisateur sont situés dans une imprimante (100).

14. Système d'impression selon la revendication 12, dans lequel la tête d'impression (54) est située dans une imprimante (100), l'afficheur et le moyen d'entrée par l'utilisateur sont situés dans un ordinateur (60), auquel l'imprimante (100) est connectée, et le moyen de commande est réparti entre l'imprimante (100) et l'ordinateur (60).

15. Système d'impression selon la revendication 12, 13 ou 14, dans lequel le moyen de commande (10, 60) est configuré de façon à commander l'intensité de ladite opération d'entretien en fonction de l'amplitude de la différence entre ledit temps actuel et ledit temps stocké.

16. Système d'impression selon la revendication 12, comportant :
une unité d'entretien (51, 52) destinée à exécuter ladite opération d'entretien de la tête d'impression ; et
une interface (61) destinée à recevoir des données d'impression et des ordres d'impression ; et dans lequel :
ladite tête d'impression (54) comporte plusieurs gicleurs destinés à éjecter de l'encre ;
le moyen de commande (10, 60) est configuré de façon à calculer la différence de temps entre le temps actuel et ledit temps stocké le plus récent et à commander l'unité d'entretien (51, 52) afin d'effectuer l'opération d'entretien avant que l'ordre d'impression actuel soit servi si ladite différence de temps est supérieure à une période de temps prédéterminée.

17. Système d'impression selon la revendication 16, dans lequel l'opération d'entretien comprend au moins l'une des opérations de projection, d'essuyage, de coiffage et d'aspiration des gicleurs.

18. Système d'impression selon la revendication 16, comportant une imprimante (100) à jet d'encre reliée à un hôte (60) au moyen de l'interface (61), dans lequel le moyen de commande (10, 60) comporte une unité de commande (10) dans l'imprimante (100) et l'unité de commande (10) est configurée de façon à transmettre un message de commande de confirmation, demandant confirmation pour l'opération d'entretien de la tête d'impression, à l'hôte (60) par l'intermédiaire de l'interface (60) lorsque la différence de temps est supérieure à la période de temps prédéterminée.

19. Système d'impression selon la revendication 18, dans lequel l'unité de commande (10) est configurée de façon à commander l'unité d'entretien (51, 52) afin que l'opération d'entretien soit exécutée en réponse à un signal de confirmation d'opération d'entretien arrivant en entrée depuis l'hôte (60) après la transmission du message de demande de confirmation à l'hôte (60).

20. Système d'impression selon la revendication 12, comportant en outre un interrupteur (71) de mise sous tension connecté à une source d'énergie extérieure pour mettre l'imprimante sous tension et hors tension, dans lequel le moyen de commande (10, 60) comprend une unité de commande (10) dans l'imprimante (100) qui est configurée pour détecter le moment auquel l'imprimante (100) est mise hors tension.

21. Système d'impression selon la revendication 20, dans lequel l'unité de commande (10) est configurée de façon à détecter le moment où de l'énergie est fournie à l'imprimante à jet d'encre (100) après que l'imprimante à jet d'encre a été mise hors tension.

22. Système d'impression selon la revendication 20, dans lequel l'unité de commande (10) est configurée pour détecter les temps de début et de fin de périodes hors tension entre les opérations d'impression successives.

23. Signal représentant un dispositif d'attaque d'imprimante pour une mise en place dans un ordinateur (60), dans lequel le dispositif d'attaque d'imprimante est configuré de façon à amener un ordinateur (60) à stocker le temps de chaque ordre d'impression généré par celui-ci et à envoyer un ordre d'entretien de tête à une imprimante (100) si, lors du service d'un ordre d'impression, la différence entre le temps actuel et le temps stocké le plus récent est supérieure à un seuil, **caractérisé en ce que** le dispositif d'attaque d'imprimante est configuré de façon à provoquer l'affichage d'un dialogue de confirmation, permettant à un utilisateur de confirmer qu'une opération d'entretien doit être exécutée, lorsque ledit seuil est dépassé.

24. Enregistrement d'un signal selon la revendication 23.

25. Ordinateur programmé avec un signal selon la revendication 23.
